# EUROPÄISCHE PATENTANMELDUNG

(11) **EP 3 012 815 A1**
(43) Veröffentlichungstag der Anmeldung: **27.04.2016**
(21) Anmeldenummer: 15188954.0
(22) Anmeldetag: 08.10.2015
(51) Int. Cl.: G08G 1/16, B60W 30/09, G08G 1/005, G01S 13/93

(54) **VERFAHREN ZUR VERMEIDUNG VON ZUSAMMENSTÖSSEN IM VERKEHR**

(30) Priorität: 09.10.2014 DE 102014114702
(71) Anmelder: Alessi Innovazioni GmbH, 5020 Salzburg (AT)
(72) Erfinder: Alessi, Mario, 76227 Karlsruhe (DE)
(74) Vertreter: Christ, Niko

(57) **Zusammenfassung**

Trotz vielfältiger Maßnahmen zur Reduzierung von Unfällen im Straßenverkehr ist die Zahl von Zusammenstößen besonders von Personen mit Fahrzeugen noch sehr hoch. Die vorliegende Erfindung wirkt dem entgegen, indem sie vorsieht, dass ein Aktivmodul ein Signal in einem in Fahrtrichtung gerichteten Sendekeil broadcastet, das im Fall eines Empfangs durch ein Passivmodul an das Aktivmodul zurückgesendet wird. Hierauf erfolgt jeweils eine Warnsignalisierung, die einen Zusammenstoß zwischen den Beteiligten vermeiden soll.

## Beschreibung

Die vorliegende Erfindung betrifft ein Verfahren zur Vermeidung von Zusammenstößen im Verkehr.

Trotzdem durch verschiedenartige Maßnahmen europaweit die Zahl an Verkehrstoten in den letzten Jahren deutlich gesenkt werden konnte, kommen statistisch immer noch im europäischen Durchschnitt jedes Jahr 52 Verkehrstote auf eine Million Einwohner. Weltweit liegen die Zahlen deutlich über diesem Schnitt, täglich sterben weltweit über 3.500 Menschen, im Jahr 2013 waren es insgesamt fast 1,3 Millionen.

Es gibt heute viele Systeme, die eingesetzt werden, um Fahrzeugführer zu einer Verringerung ihrer Geschwindigkeit und die Beachtung der Verkehrsordnung zu bewegen. Auch wenn diese Maßnahmen lokal wirksam sind, bedingt ihr Einsatz doch häufig repressive Maßnahmen oder verursacht Verkehrsbehinderungen. Neben Messgeräten zur Geschwindigkeitskontrolle mit Fotoapparaten, die das Fahrzeug, das die Geschwindigkeitsüberschreitung begeht, erfassen, sind im Straßenverkehr ebenfalls Fahrbahnschwellen im Einsatz, die den Fahrer dazu zwingen, ein mäßiges Tempo nicht zu überschreiten. Insbesondere im innerstädtischen Bereich werden zudem Fahrbahnbeläge gewählt, die den Fahrkomfort bei erhöhten Geschwindigkeiten herabsetzen. Die Problematik besteht jedoch ebenso im Kontaktbereich zwischen Schwimmern und Tauchern mit Booten.

Ferner hat auch die Technologie im Fahrzeug große Fortschritte sowohl bei aktiven als auch bei passiven Sicherheitssystemen gemacht. Vor allem den Insassen im Fahrzeug bieten solche Systeme mehr Sicherheit, sie interagieren aber auch mit dem Fahrer, um auf gefährliche Situationen hinzuweisen und die Reaktionsfähigkeit des Fahrers zu verstärken. Während solche Systeme sinnvoll und effektiv sind, sind sie jedoch gleichzeitig häufig teuer, so dass ihr Einsatz lediglich schleppend Verbreitung findet. Ein Aftermarket existiert in diesem Bereich fast gar nicht, was vor allem an fehlenden staatlichen Maßnahmen liegt, um Anreize für die Anschaffung solcher Sicherheitssysteme zu schaffen.

Soweit Fußgänger betroffen sind, werden diese meistens in Unfälle innerorts verwickelt. Dabei haben insbesondere Kinder und ältere Menschen einen besonders großen Anteil an den betroffenen Personen. Insbesondere Kinder haben naturgemäß nur sehr wenig Erfahrung im Straßenverkehr, können die Gefahren in einer konkreten Situation nur schwer einschätzen und reagieren teilweise unvorhersehbar.

Vor diesem Hintergrund liegt der vorliegenden Erfindung die Aufgabe zugrunde, ein Verfahren zur Vermeidung von Zusammenstößen im Verkehr vor allem zwischen Fahrzeugen und Fußgängern zu schaffen, welches es ermöglicht, sowohl bei dem Fahrzeugführer als auch bei dem Fußgänger oder Schwimmer ein Bewusstsein für einen drohenden Zusammenstoß rechtzeitig vorher zu schaffen, so dass ein solcher Zusammenstoß noch vermieden werden kann.

Dies gelingt durch ein Verfahren zur Vermeidung von Zusammenstößen im Verkehr gemäß den Merkmalen des Anspruchs 1. Weitere, sinnvolle Ausgestaltungen eines derartigen Verfahrens können den Unteransprüchen entnommen werden.

Erfindungsgemäß ist vorgesehen, dass ein Fahrzeug mit einem Aktivmodul ausgestattet ist, während ein Fußgänger oder Schwimmer, ebenso aber ein Radfahrer, Rollstuhlfahrer oder vergleichbar gefährdete Person ein Passivmodul mit sich führt. Das Aktivmodul weist eine Sende-/Empfangseinrichtung auf, mit welcher ein keilförmiger Bereich in Fahrtrichtung des Fahrzeugs abgedeckt werden kann. In diesen keilförmigen Bereich hinein sendet das Aktivmodul ein Signal, welches das sich nähernde Fahrzeug meldet. Befindet sich in dem Sendekeil des Aktivmoduls ein Passivmodul, so wird dieses mit einer eigenen Sende-/Empfangseinrichtung das Signal des Aktivmoduls empfangen und als eigenen Broadcast in alle Raumrichtungen zurücksenden. Gleichzeitig wird das Passivmodul eine Warnmeldung ausgeben, um die das Passivmodul tragende Person vor dem herannahenden Fahrzeug zu warnen. Das Aktivmodul wiederum empfängt die zurückgesendete Nachricht des Passivmoduls, erkennt die Nachricht als seine eigene Nachricht und wird daraufhin seinerseits eine Warnmeldung ausgeben.

Auf diese Weise kann ein System realisiert werden, in welchem zunächst initiativ das Fahrzeug Signale aussendet und insbesondere in seiner Fahrtrichtung auf sich aufmerksam macht. Nachdem das Fahrzeug potenziell lediglich Personen in seiner Fahrtrichtung erfassen könnte, ist es ausreichend, einen Sendekeil nach vorne zu richten, um nicht unnötigerweise Personen neben dem Fahrzeug zu warnen, welche ohnehin keiner Gefahr ausgesetzt sind. Im Sinne einer energieeffizienten Nutzung des Passivmoduls wird dieses zwar permanent auf Empfang sein, seinerseits jedoch nur dann senden, wenn dies aufgrund herannahender Fahrzeuge erforderlich ist. So kann ein effektives und langlebiges System geschaffen werden, das rechtzeitig vor einem möglichen Zusammenstoß warnt.

In Weiterbildung des von dem Fahrzeug ausgesandten Signals kann das Aktivmodul einen Frequenzmodulator aufweisen, mit dem es das ausgesandte Signal mit einer oder mehreren Modulationsfrequenzen überlagert. Durch die Überlagerung des Signals mit unterschiedlichen Modulationsfrequenzen kann die Reichweite des Signals beeinflusst werden. Je langwelliger das Signal ausgesandt wird, desto größer wird die Reichweite sein, da langwellige Signale energiereicher sind. Dadurch, dass mehrere modulierte Signale ausgesandt werden, kann unterschieden werden, welches Signal von dem Passivmodul empfangen und zurückgeworfen wurde, so dass auch auf diese Weise der Abstand des Passivmoduls zu dem Aktivmodul erfasst werden kann. So ist es möglich, bei einem kurzen Abstand andere Warnmeldungen auszusenden, als dies bei einem noch relativ weiten Abstand der Fall sein müsste. Beispielsweise könnte bei einem weit entfernten Passivmodul lediglich eine akustische Warnmeldung vom Aktivmodul ausgesandt werden, während bei einem kürzesten Abstand etwa auch Bremsmaßnahmen automatisch von dem Aktivmodul eingeleitet werden könnten.

In diesem Zusammenhang kann in weiterer Ausgestaltung des Verfahrens dem Aktivmodul auch ein Mittel zur Erfassung der Fahrtgeschwindigkeit des Fahrzeugs zugeordnet sein, beispielsweise ein GPS-Empfänger. Auf der Basis der eigenen Fahrtgeschwindigkeit kann das Aktivmodul dann die Modulationsfrequenzen seiner Signalisierung an die Geschwindigkeit anpassen, so dass bei größeren Geschwindigkeiten eine größere Reichweite erzielt werden kann. Auf diese Art und Weise werden Fehlsignalisierungen aufgrund unpassender Reichweiteneinstellungen wirkungsvoll vermieden.

Die Signalisierung seitens des Aktivmoduls, aber auch seitens des Passivmoduls, kann hierbei auf akustische, optische oder auch haptische Weise erfolgen. Durch einen etwa bei abnehmendem Abstand intensiver werdenden Warnton, zunehmendes Blinken oder Vibrieren macht das Aktivmodul wie auch das Passivmodul auf sich aufmerksam und sorgt dafür, dass der drohende Zusammenstoß seitens der beteiligten Personen nicht unbemerkt bleibt, bis er eintrifft. Im äußersten Fall kann seitens des Aktivmoduls ein Bremsmanöver oder auch ein Ausweichmanöver des Fahrzeugs eingeleitet werden, wobei in diesem Fall eine zusätzliche Abklärung um das Fahrzeug herum stattfinden kann, um nicht durch das Ausweich- oder Bremsmanöver eine andere, gegebenenfalls noch größere Gefahrensituation zu schaffen.

Für den Fall, dass dennoch ein Schaden auftritt, kann dem Aktivmodul, aber auch dem Passivmodul, ein Massenspeicher zugeordnet sein, welcher den Signalverkehr der beteiligten Aktivmodule, Passivmodule etc. aufzeichnet. Eine solche Aufzeichnung kann beispielsweise lediglich bei einer ersten Warnmeldung gestartet und binnen eines festlegten Zeitraums anschließend wieder beendet werden. Im Fall eines doch eintretenden Unfalls können die Daten des Passivmoduls oder des Aktivmoduls ausgewertet werden. Dies gilt selbstverständlich auch bei einem Zusammenstoß mehrerer Fahrzeuge, das Warnsignal erfolgt in diesem Zusammenhang auch dann, wenn Fahrzeuge aufeinander zu fahren und gegenseitig ihre Signale empfangen und daraufhin gegenseitig zurückwerfen. Ein Empfangen und Zurückwerfen eines Signals eines Aktivmoduls kann insoweit auch durch ein anderes Aktivmodul erfolgen, das in diesem Fall die Rolle eines Passivmoduls einnimmt.

Wichtig ist selbstverständlich, dass das Passivmodul, mehr noch als das Aktivmodul, auch tatsächlich von der betreffenden Person mitgeführt wird, so dass es sinnvoll ist, ein solches Passivmodul in einen Gegenstand des täglichen Lebens zu integrieren. Neben der Möglichkeit, das Passivmodul als separates Gerät mitzuführen, besteht daher die Möglichkeit, es in ein Smartphone, eine Uhr, ein Kleidungsstück oder eine Tasche oder dergleichen mehr zu integrieren, welche regelmäßig mitgeführt werden. Auch eine Integration in ein Fahrrad oder einen typischerweise von Radfahrern mitgeführten Gegenstand oder auch in einen Rollstuhl kann hierbei vorgesehen sein. Hinsichtlich der Integration in ein Kleidungsstück ist besonders bevorzugt die Integration in einen Schuh zu erwähnen, da dort insbesondere im Bereich der Sohle genügend Raum vorhanden ist, um das Passivmodul in einer nicht störenden Art und Weise unterzubringen. Für Schwimmer, die vor herannahenden Booten gewarnt werden sollen, ist eine Integration in die Badekleidung sinnvoll.

Hinsichtlich des Aktivmoduls kann dieses wiederum ein separates Gerät darstellen, oder aber in einem Smartphone, einem Navigationsgerät oder einem Mautgerät integriert sein. Ohne Weiteres sind auch andere im Fahrzeug mitgeführte Geräte hierfür geeignet.

In Weiterbildung des Verfahrens können im Verkehrsraum Überwachungssensoren angeordnet sein, welche die Signale der Aktivmodule und Passivmodule empfangen und sammeln. Geschieht im direkten Umfeld eines solchen Überwachungssensors ein Unfall, so können dessen gespeicherte Daten ergänzend hinzugezogen werden. Derartige Überwachungssensoren können beispielsweise in Laternenpfählen, Leitpfosten und Stadtmöbeln integriert sein und damit eine hohe Präsenz im Alltag besitzen.

Insbesondere im Bereich der Fußgängerüberwege können zudem Passivmodule fest installiert sein, welche generell den Fahrzeugführer vor möglichen Kollisionen mit Fußgängern warnen. In sinnvoller Ausgestaltung dieser Weiterbildung können an den Fußgängerüberwegen Erkennungsmittel zur Erfassung von Fußgängern angeordnet sein, so dass die dort angeordneten Passivmodule nur dann ein empfangenes Signal in einem Broadcast zurücksenden, wenn sich auch tatsächlich Fußgänger auf dem Fußgängerüberweg befinden. In dieser Ausgestaltung müssten die Fußgänger selbst nicht unbedingt eigene Passivmodule mit sich führen. Entsprechend können derartige integrierte Passivmodule auch im Bereich von Schulwegen, Kindergartenwegen und Baustellen Verwendung finden, wo sich ebenfalls häufig Unfälle ereignen.

In gleicher Art und Weise können Passivmodule an Bushaltestellen angeordnet sein, wobei insbesondere lediglich dann ein empfangenes Signal zurückgesendet wird, wenn mithilfe einer Auswerteeinheit festgestellt wird, dass sich auch ein Bus im Bereich der Bushaltestelle befindet oder innerhalb kurzer Frist befunden hat.

Die vorstehend beschriebene Erfindung wird im Folgenden anhand eines Ausführungsbeispiels näher erläutert.

Es zeigen
- Figur 1: eine Straßenszene mit einem Fußgängerüberweg und einem diesen überquerenden Fußgänger, sowie einem sich annähernden Fahrzeug in einer schematischen Darstellung von oben,
- Figur 2: die Straßenszene gemäß Figur 1 nach einem weiteren Herannahen des Fahrzeugs in einer schematischen Darstellung von oben,
- Figur 3: die Straßenszene gemäß Figur 1 mit einem unmittelbar vor dem Fußgängerüberweg stehenden Fahrzeug, in einer schematischen Darstellung von oben,
- Figur 4: eine Straßenszene mit einem Fußgängerüberweg mit integriertem Passivmodul, einem diesen überquerenden Fußgänger sowie einem sich nähernden Fahrzeug in einer schematischen Darstellung von oben, sowie
- Figur 5: eine Straßenszene mit einer Bushaltestelle mit integriertem Passivmodul, einem Fahrzeug sowie einem Bus 2 in einer schematischen Darstellung von oben.

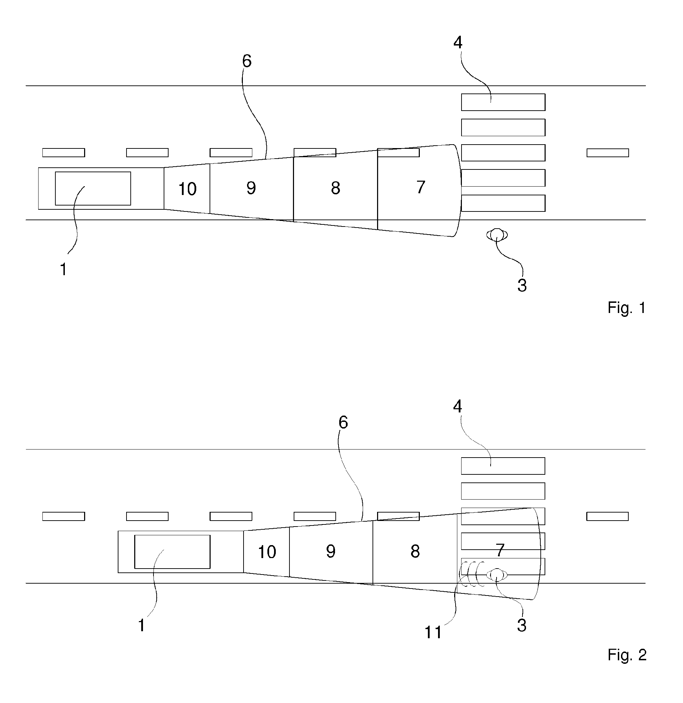

Figur 1 zeigt eine Straßenszene mit einem Fußgängerüberweg 4, über welchen ein Fußgänger 3 die Straße überqueren möchte. Ein Fahrzeug 1 nähert sich, wobei das Fahrzeug ein Aktivmodul mit sich führt, welches mit einer Sende-/Empfangseinrichtung einen Sendekeil 6 in Fahrtrichtung des Fahrzeugs 1 aussendet. Durch eine Modulation der Sendefrequenz werden verschiedene Modulationsbereiche 7, 8, 9, 10 gebildet, in welche die modulierten Signale des Aktivmoduls hineinreichen. In dem in Figur 1 gezeigten Szenario reicht der Sendekeil aufgrund der Reichweite des ersten Modulationsbereichs 7 noch nicht bis an den Fußgänger 3 heran, so dass in diesem Moment noch keine Interaktion zwischen einem von dem Fußgänger 3 getragenen Passivmodul und dem Aktivmodul im Fahrzeug 1 erfolgt.

Figur 2 zeigt dieselbe Szene nach einer weiteren Annäherung des Fahrzeugs 1 an den Fußgängerüberweg 4, während gleichzeitig der Fußgänger 3 auf den Fußgängerüberweg 4 getreten ist. In dieser Entfernung wird nunmehr der Fußgänger 3 sich in einem ersten Modulationsbereich 7 des Sendekeils 6 des Aktivmoduls in dem Fahrzeug 1 befinden, so dass das Passivmodul des Fußgängers 3 das Signal des ersten Modulationsbereichs 7 empfängt. Nach dem Empfang dieses Signals wird das Passivmodul ein gleichlautendes Signal in einem Broadcast 11 in alle Raumrichtungen zurückwerfen, wobei dieser Broadcast 11 hierbei auch das Aktivmodul in dem Fahrzeug 1 erreichen wird. Gleichzeitig wird das Passivmodul den Fußgänger 3 durch eine Warnmeldung, etwa durch eine Vibration, auf das herannahende Fahrzeug 1 aufmerksam machen. Nachdem das Aktivmodul in dem Fahrzeug 1 den Broadcast 11 des Passivmoduls empfangen hat, wird auch eine Warnmeldung an den Fahrzeugführer des Fahrzeugs 1 generiert, welche beispielsweise ebenfalls haptischer Natur sein kann, indem beispielsweise eine Vibration am Lenkrad oder eine Vibration eines anderen, das Aktivmodul enthaltenden Geräts, wie beispielsweise eines Smartphones, ausgelöst wird.

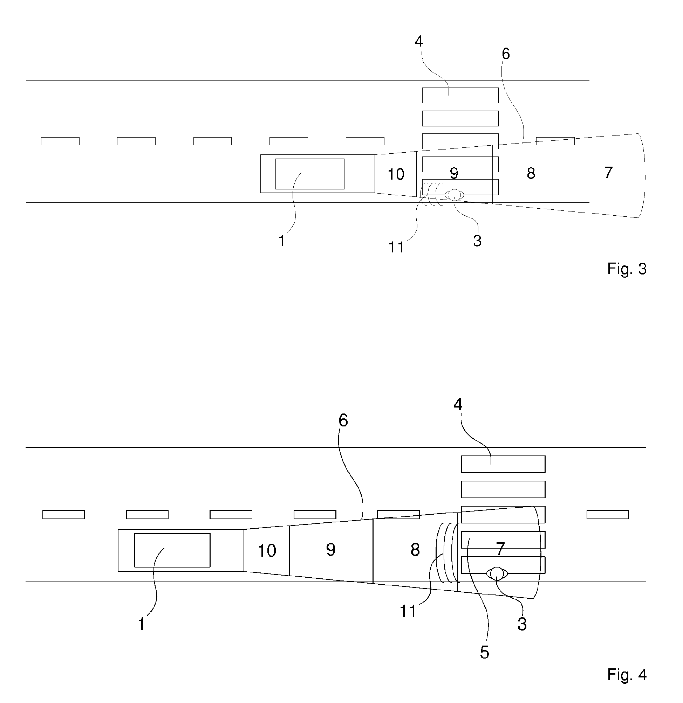

In Figur 3 wird das Fahrzeug 1 bereits deutlich näher an den Fußgänger 3 herangekommen sein. Dieser befindet sich damit bereits in einem dritten Modulationsbereich 9, das von dem Fußgänger 3 mitgeführte Passivmodul wird daher in weiteren Broadcasts 11 das entsprechende Modulationssignal des dritten Modulationsbereichs 9 an das Aktivmodul im Fahrzeug 1 zurücksenden, so dass dort mit deutlich mehr Nachdruck signalisiert wird, dass der Fußgänger 3 sich auf dem Fußgängerüberweg 4 befindet. Die langwelligeren, ansonsten gleichartigen empfangenen Signale des Aktivmoduls wird das Passivmodul hierbei ignorieren und lediglich das kurzwelligste, empfangene Signal zurückwerfen. Tritt hingegen der Fußgänger 3 wieder zurück oder weiter aus dem Sendekeil 6 heraus, so endet die Signalisierung. In diesem Fall ist auch eine Gefahr eines Zusammenstoßes zunächst gebannt.

Figur 4 zeigt eine alternative Ausgestaltung, in welcher der Fußgänger 3 kein Passivmodul mit sich führt. In diesem Fall ist aber ein integriertes Passivmodul 5 in den Asphalt im Bereich des Fußgängerüberwegs 4 integriert, wobei gleichzeitig ein Erfassungsmittel im Bereich des Fußgängerüberwegs 4 feststellt, dass sich ein Fußgänger 3 auf dem Fußgängerüberweg 4 befindet. Aufgrund dieser Feststellung wird nach einem Empfang des Signals eines Aktivmoduls des Fahrzeugs 1 im zweiten Modulationsbereich 8 ebenfalls ein Broadcast 11 generiert, welcher von dem Aktivmodul im Fahrzeug 1 aufgefangen wird und dort eine Warnmeldung auslöst. Auf diese Art und Weise kann das System auch Personen zugute kommen, welche selbst kein Passivmodul mit sich führen.

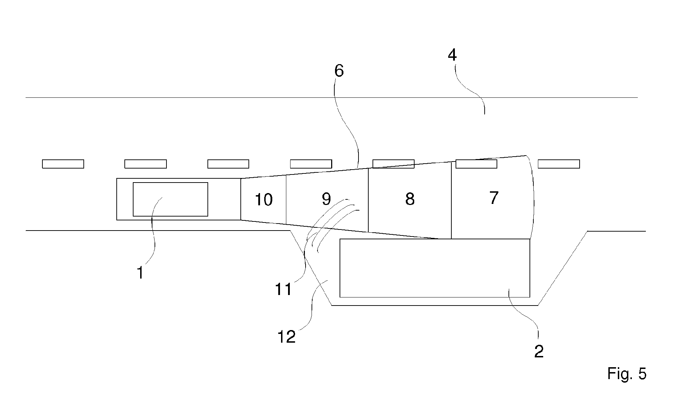

Figur 5 zeigt eine weitere alternative Straßenszene, wobei eine Bushaltestelle 12 an die Straße angrenzt. Ein sich näherndes Fahrzeug 1 gerät mit seinem Sendekeil 6 in den Bereich der Bushaltestelle 12, in welche Passivmodule integriert sind. Diese werden einen Broadcast 11 aussenden, welcher von dem Aktivmodul des Fahrzeugs 1 empfangen werden kann, woraufhin das Fahrzeug hinsichtlich der Gefahr im Bereich der Bushaltestelle 12 gewarnt wird. Ein solcher Broadcast 11 kann wiederum ebenfalls auch aufgrund einer Messung eines Erfassungsmittels erfolgen, so dass eine Benachrichtigung an den Fahrzeugführer lediglich dann erfolgt, wenn auch ein Bus 2 im Bereich der Bushaltestelle vorhanden ist. Ergänzend kann eine Signalisierung auch dann noch erfolgen, wenn ein Bus 2 soeben erst die Bushaltestelle 12 verlassen hat und zu erwarten ist, dass sich noch Personen im Bereich der Bushaltestelle 12 befinden, welche möglicherweise die Straße überqueren wollen.

Vorstehend beschrieben ist somit ein Verfahren zur Vermeidung von Zusammenstößen im Straßenverkehr, bei dem von den Fahrzeugen ein Aktivmodul und von den einzelnen Personen ein Passivmodul mitgeführt wird, welche bei drohenden Zusammenstößen miteinander kommunizieren und im Zuge einer solchen Kommunikation Warnsignale an die jeweils beteiligten Personen aussenden. So kann in einfacher Art und Weise ein Bewusstsein für einen drohenden Zusammenstoß geschaffen werden und dieser durch eine rechtzeitige Warnung an die beteiligten Personen verhindert werden.

### BEZUGSZEICHENLISTE

- 1: Fahrzeug
- 2: Bus
- 3: Fußgänger
- 4: Fußgängerüberweg
- 5: integriertes Passivmodul
- 6: Sendekeil
- 7: erster Modulationsbereich
- 8: zweiter Modulationsbereich
- 9: dritter Modulationsbereich
- 10: vierter Modulationsbereich
- 11: Broadcast
- 12: Bushaltestelle

## Patentansprüche

1. Verfahren zur Vermeidung von Zusammenstößen im Verkehr, wobei ein Aktivmodul mit einer Sende-/Empfangseinrichtung zur Signalisierung und zum Signalempfang in einem in Fahrtrichtung eines Fahrzeugs (1) gerichteten Sendekeil (6) ausgestattet ist und ein Passivmodul eine Sende-/Empfangseinrichtung zur Signalisierung und zum Signalempfang in alle Raumrichtungen aufweist und wobei das Aktivmodul Signale broadcastet und das Passivmodul empfangene Signale eines Aktivmoduls seinerseits in einem Broadcast (11) zurücksendet und eine Warnmeldung ausgibt, und das Aktivmodul bei einem Empfang seines eigenen, von dem Passivmodul zurückgesendeten Signals seinerseits eine Warnmeldung ausgibt.

2. Verfahren gemäß Anspruch 1, **dadurch gekennzeichnet, dass** das Aktivmodul einen Frequenzmodulator aufweist, mit dem es ein Signal mit mehreren Modulationsfrequenzen überlagert.

3. Verfahren gemäß Anspruch 2, **dadurch gekennzeichnet, dass** das Aktivmodul Mittel zur Erfassung der Fahrtgeschwindigkeit des Fahrzeugs (1) umfasst und die Modulationsfrequenzen in Abhängigkeit von der Fahrtgeschwindigkeit des Fahrzeugs (1) anpasst.

4. Verfahren gemäß einem der vorhergehenden Ansprüche, **dadurch gekennzeichnet, dass** das Aktivmodul und/oder das Passivmodul auf ein Warnsignal hin eine akustische und/oder optische und/oder eine haptische Alarmsignalisierung auslöst.

5. Verfahren gemäß einem der vorhergehenden Ansprüche, **dadurch gekennzeichnet, dass** das Aktivmodul auf ein Warnsignal hin ein Bremsmanöver und/oder ein Ausweichmanöver des Fahrzeugs (1) einleitet.

6. Verfahren gemäß einem der vorhergehenden Ansprüche, **dadurch gekennzeichnet, dass** dem Aktivmodul und/oder dem Passivmodul ein Massenspeicher zur Aufzeichnung von Signalverkehr von Aktivmodulen und/oder Passivmodulen zugeordnet ist.

7. Verfahren gemäß einem der vorhergehenden Ansprüche, **dadurch gekennzeichnet, dass** den Broadcasts (11) des Aktivmoduls und/oder des Passivmoduls eine eindeutige Kennung des betreffenden Aktivmoduls bzw. Passivmoduls zugeordnet ist.

8. Verfahren gemäß einem der vorhergehenden Ansprüche, **dadurch gekennzeichnet, dass** das Passivmodul in einem Smartphone, einer Uhr, einem Kleidungsstück, Badekleidung oder einer Tasche integriert oder an einem Fahrrad oder einem Rollstuhl angeordnet ist.

9. Verfahren gemäß einem der vorhergehenden Ansprüche, **dadurch gekennzeichnet, dass** das Aktivmodul direkt in einem Fahrzeug (1), zu Land oder zu Wasser, oder in einem Smartphone, einem Navigationsgerät oder einem Mautgerät integriert ist.

10. Verfahren gemäß einem der vorhergehenden Ansprüchen, **dadurch gekennzeichnet, dass** im Verkehrsraum Überwachungssensoren Signale der Aktivmodule und/oder Passivmodule empfangen und sammeln.

11. Verfahren gemäß Anspruch 10, **dadurch gekennzeichnet, dass** die Überwachungssensoren in Laternenpfählen, Leitpfosten und/oder Stadtmöbeln integriert sind.

12. Verfahren gemäß einem der vorhergehenden Ansprüche, **dadurch gekennzeichnet, dass** Passivmodule an Fußgängerüberwegen (4) angeordnet sind.

13. Verfahren gemäß Anspruch 12, **dadurch gekennzeichnet, dass** die an Fußgängerüberwegen (4) angeordneten Passivmodule nur dann ein empfangenes Signal in einem Broadcast (11) zurücksenden, wenn eine Auswerteeinheit mithilfe von Erkennungsmitteln feststellt, dass sich wenigstens ein Fußgänger (3) oder Radfahrer auf dem Fußgängerüberweg (4) befindet.

14. Verfahren gemäß einem der vorhergehenden Ansprüche, **dadurch gekennzeichnet, dass** Passivmodule an Bushaltestellen (12), Schulwegen, Kindergartenwegen oder an Baustellen angeordnet sind.

15. Verfahren gemäß Anspruch 14, **dadurch gekennzeichnet, dass** die an Bushaltestellen (12) angeordneten Passivmodule nur dann ein empfangenes Signal broadcasten, wenn eine Auswerteeinheit mithilfe von Erkennungsmitteln feststellt, dass ein Bus (2) im Bereich der Bushaltestelle (12) anhält.

16. Verfahren gemäß einem der vorhergehenden Ansprüche, **dadurch gekennzeichnet, dass** ein Aktivmodul, welches in den Sendekeil (6) eines anderen Aktivmoduls gerät und dessen Signal empfängt, gleichzeitig die Funktion eines Passivmoduls einnimmt.
